# EUROPEAN PATENT SPECIFICATION

(11) **EP 1 478 447 B1**
(45) Date of publication and mention of the grant of the patent: **16.08.2006**
(21) Application number: 03706756.8
(22) Date of filing: 04.03.2003
(51) Int. Cl.: B01D 15/08, A61K 36/00

(54) **PROCESS FOR EXTRACTING POLAR PHYTOCHEMICALS**
VERFAHREN ZUR EXTRAKTION VON POLARISCHEN PHYTOCHEMIKALIEN
PROCEDE D'EXTRACTION DE PRODUITS PHYTOCHIMIQUES POLAIRES

(30) Priority: 06.03.2002 GB 0205182
(43) Date of publication of application: 24.11.2004
(73) Proprietor: M N L Pharma Limited, Aberystwyth Ceredigion SY23 3EB (GB)
(72) Inventor: Watson, Alison Ann, Ystrad-Meurig, Ceredigion SY25 6AF (GB); Nash, Robert James, Ystrad-Meurig, Ceredigion SY25 6AF (GB)
(74) Representative: Fry, Alan Valentine
(86) International application number: PCT/GB2003/000905
(87) International publication number: WO 2003/074146

(56) References cited:
- WO-A-99/34810
- PATENT ABSTRACTS OF JAPAN vol. 1996, no. 12, 26 December 1996 (1996-12-26) & JP 08 208651 A (TOPPAN PRINTING CO LTD), 13 August 1996 (1996-08-13)
- CHAN-YEO C ET AL: "Liquid chromatographic separation of the alkaloids in coptis-evodia herb couple" JOURNAL OF CHROMATOGRAPHY A, ELSEVIER SCIENCE, NL, vol. 756, no. 1, 20 December 1996 (1996-12-20), pages 137-144, XP004015217 ISSN: 0021-9673
- RONDINA R V D ET AL: "STANDARD METHOD FOR THE SYSTEMATIC PREPARATION AND FRACTIONATION OF PLANT EXTRACTS TO TRACE THEIR PHARMACOLOGICAL ACTIVITY AND FOR CHEMICAL STUDY" BIOSIS, XP002212492

## Description

### Field of the Invention

The invention relates to processes for the fractionation of natural (e.g. plant) materials, In particular, the invention relates to processes for profiling plants (e.g. for quality control purposes), for producing libraries of plant extracts and isolated phytochemicals, to the construction of phytochemical directories and to processes for the extraction, separation, isolation, characterization and screening of plant extracts and phytochemical isolates.

### Background to the Invention

### Drug discovery

The discovery of new drugs, agrochemicals or other biologically active compounds is dependent on the ability to rapidly identify and characterize active chemicals for commercial development. Plants and other natural products have a vast molecular diversity and functionality and products derived from plants currently account for billions of pounds of annual sales in the pharmaceutical and agrochemical markets.

However, preparing plant extracts for screening is laborious and fraught with difficulties. A basic problem arises from the large number of phytochemicals present: a typical plant may contain well over 5000 unique phytochemical compounds in a wide range of concentrations.

The conventional approach for dealing with the above problem is to test selected plant sources as fairly crude extracts containing complex mixtures of phytochemical compounds. Typically, one to three extracts per plant are prepared for screening. These extracts may contain ten to two hundred compounds per extract. Each extract is then tested for a desired activity, which if detected is then used to guide a process of purification and identification of the active phytochemical(s).

However, such methods are laborious and inefficient, largely because of the presence in the extracts used for screening of compounds which can interfere in biological assays. Such compounds may mask a biological property or interfere with the mechanism of the biological assay. Among the many phytochemicals known to interfere in this way are fatty acids, phospholipids and tri-, di-, and monoglycerides, all of which can inhibit receptor-ligand binding or modify the structure or conformation of receptors. This may result in false positives or false negatives during bioassay.

Another problem which arises during screening of plant extracts arises from the masking of the activity of minor components present in the extracts by the activity of major components: of the thousands of phytochemicals present in the whole plant, the biological activity detected in a crude extract may reflect only the activity of the 10-15 major components. Moreover, because the collision frequency and proper orientation of a ligand and its receptor play a role in binding, screening plant extracts with numerous compounds may interfere with certain biological effects.

There is therefore a need for improved processes for producing plant extracts.

### Drug production

In addition to providing an important source of new lead compounds in drug and agrochemical development, plants can also serve as a source of raw materials in the large-scale production of industrially useful phytochemicals, acting as a convenient and economical alternative to synthetic production strategies.

For example, the commercial production of new drugs from plants has been shown to be a viable option by Bristol-Myers Squibb in the case of Taxol^{™}, which is a very minor component in the bark of certain yew trees. However, it is now produced by semi-synthetic modification of a related compound found in greater abundance in needles of the European Yew. Daffodils are also beginning to be cultivated in East Anglia for extraction of galanthamine for treatment of Alzheimer's disease. JP08208651 describes the use of a polar solvent to extract *Nandina domestica* in a process for the extraction of the sedative scoulerine.

In the future, therefore, traditional crops are likely to form the basis of new pharmaceutical enterprises.

However, the full potential of plant cultivation as an alternative to large-scale synthetic chemistry in the production of industrial chemicals is presently limited by inadequate information regarding the extent to which known industrial chemicals (or their close structural relatives) occur naturally in plants. Information on the natural distribution in plants of known industrial chemicals (including drugs, agrochemicals etc.) or of related phytochemicals which can serve as intermediates in the semi-synthetic production of such industrial chemicals would permit the rational selection of a particular crop as a source of an industrial chemical.

There is therefore a need for the development and application of techniques which can be used to screen large numbers of different plants for the presence of certain phytochemicals, thereby permitting the construction of a phytochemical directory which provides a concordance of known industrially useful chemicals and their corresponding plant source(s).

### Herbal product standardization and quality control

There is presently great interest in the use of herbal remedies and a growing acceptance from healthcare companies and the medical profession that the holistic approach of herbal medicinal products has value and can complement established therapy. The revival of interest has been stimulated particularly by the successful use of standardized herbal medicinal products to treat chronic conditions for which conventional medicine is perceived to offer little therapeutic benefit. For example, standardized extracts of *Valeriana officinalis* are used widely in Europe as sedatives, acting as natural alternatives to benzodiazepine drugs, while standardized extracts of *Ginkgo biloba* leaves are frequently prescribed in Germany and taken to alleviate cerebral ischemia. Other examples of herbal medicaments include Panax ginseng, *Allium sativum* (garlic), *Ginkgo biloba, Hypericum perforatum* (St John's wort), *Echinacea angustifolia* and *Aloe vera.*

A consequence of this tendency by the medical establishment to embrace the virtues of "herbal" products is that they will be subject to the same level of regulation as conventional drugs, to the benefit of the consumer. Thus, documented evidence of efficacy and safety, and of quality control for batch-to-batch reproducibility in levels of active components will be essential.

However, quality control of herbal medicines is difficult due to the complex nature and inherent non-uniformity of plant materials. The materials used in herbal and plant based medicine are usually whole plants or parts or extracts thereof. Since plant and fungal materials contain many different chemical components the materials are complex mixtures. This makes it very difficult to standardize and control the quality of the materials. Moreover, many herbal medicines are mixtures of two or more plant-based components and are therefore mixtures of mixtures, so introducing a further level of complexity.

The active components of most herbal products remain under debate and inactive "markers" are often used for standardization. Such markers may be present in inactive products, or absent from active products.

Furthermore, the recipes and methods of manufacture used are often not uniform and may remain undisclosed. These factors make it very difficult to ensure that two samples of a given product, obtained from disparate sources and ostensibly identical, do in fact contain the same mixture of ingredients. This problem, which leads to difficulties in controlling the quality of such materials, has limited the use of certain herbal remedies even amongst herbal practitioners.

Other problems arise from the fact that the plants used in the practice of herbal medicine are frequently unavailable locally and therefore need to be obtained from sources which are remote from the end user. However, the supply of such plants from remote locations can be erratic and inaccurate, particularly because no detailed monographs including identity and quality standards exist for many such plants. The complex mixture of ingredients found in medicinal plants varies widely in type and concentration depending on many factors including the botanical source, the location where the plant is grown, the time of year when the plant is harvested, the conditions under which the material is stored and processed and the extraction procedure used.

There is therefore a need for sensitive processes which can profile herbal products and so establish a standard specification for a medicinal plant material which can be related to therapeutic activity, so permitting quality control in the production of herbal medicines and ideally quantifying the components known or likely to be active.

### Summary of the Invention

According to the invention there is provided a process comprising the steps of: (a) providing a natural (e.g. plant) material; (b) extracting a first sample of the material with a polar solvent to produce a polar extract and a non-polar residue; (c) subjecting the polar extract of step (b) to ion-exchange chromatography to produce an extract enriched in ionic-compounds and a non-ionic residue (which may for example comprise sugars, fats and phenolic compounds); and (d) chromatographically fractionating the enriched extract of step (c) to yield one or more polar fractions comprising one or more ionic phytochemical(s) (which may for example comprise alkaloids (for example, water soluble, or polar, alkaloids), amino acids and small amines).

In a variant of the process of the invention the non-ionic residue is scavenged for non-ionic species. This optional scavenging process may comprise the steps of: (i) subjecting the non-ionic residue to hydrophobic interaction or reversed-phase chromatography to produce a scavenged non-ionic extract depleted in sugars; and (ii) chromatographically fractionating the scavenged extract to yield one or more scavenged fractions comprising one or more non-ionic phytochemical(s).

In a further variant of the process of the invention, the process further comprises the steps of: (i) extracting a second sample of the material or sequentially extracting the non-polar residue of the first sample with a non-polar solvent to produce a non-polar extract; (ii) subjecting the non-polar extract to hydrophobic interaction or reversed-phase chromatography to produce an extract depleted in fats and chlorophyll; and (iii) chromatographically fractionating the depleted extract to yield one or more non-polar fractions comprising one or more non-polar phytochemical(s).

The processes of the invention (and their variants) are useful in a wide variety of applications.

In a first application, the processes of the invention are used for producing a library of phytochemicals in a process which further comprises the steps of collecting and isolating the fractions and ordering and arraying the isolates.

In a second application, the processes of the invention are used for producing a phytochemical profile of a plant in a process which further comprises the step of characterizing the fraction(s). Such processes are particularly useful for establishing a standard specification for a medicinal plant material, when the process further comprises the steps of characterizing the fraction(s) and defining a standard specification for the said plant material on the basis of the characteristics defined.

In a third application, the processes of the invention are used for preparing a defined plant extract in a process in which the chromatographic fractionation step(s) comprise preparative chromatography.

In a fourth application, the processes of the invention are used for producing an isolated phytochemical in a process which further comprises the steps of collecting the fraction(s) and isolating the phytochemical(s) therefrom.

In a fifth application, the processes of the invention are used for screening a plant for the presence of a biologically active phytochemical in a process which further comprises the step of characterizing the fraction(s) to yield an index of biological activity.

In a sixth application, the process of the invention is used for producing a phytochemical directory in a process wherein the plant material is derived from a single botanical reference source and the process further comprises an iterative cycle of the following steps: (i) characterizing the fraction(s); (ii) determining whether the characterized fraction(s) contain one or more phytochemical(s) of interest, thereby obtaining data; and (iii) associating the data obtained in (ii) with the botanical reference source to produce a phytochemical directory component, whereby iteration of the steps (i) to (iii) with a plurality of different botanical reference sources produces a plurality of directory components and thereby forms a phytochemical directory.

In a seventh application, the process of the invention is used in a process for producing a herbal medicinal product, the process further comprising the step of characterizing the fraction(s) and determining whether the product meets a standard specification for the said product on the basis of the characteristics defined.

### Detailed Description of the Invention

### Definitions

Where used herein and unless specifically indicated otherwise, the following terms are intended to have the following meanings in addition to any broader (or narrower) meanings the terms might enjoy in the art:

The term *plant* is used herein in a broad sense to encompass not only plants *sensu stricto* but also fungi and bacteria.

The term *phytochemical* is used herein in a broad sense to encompass any chemical constituent of a plant, including macromolecules and small molecules. Important examples include alkaloids (for example pyrrolidines, piperidines, pyrrolizidine, indolizidines, tropanes and nortropanes), carbohydrate analogues, phenolic compounds, terpenoids, enzyme inhibitors, glycosides, nucleotides, amino acids, lipids and sugars. The phytochemicals of the invention may act *inter alia* as drugs, agrochemicals, templates for combinatorial chemistry, antioxidants, markers of botanical origin or quality, animal poisons, pesticides, cosmetics and food additives.

The term *isolated* is used herein to indicate that the isolated material (e.g. the phytochemical) exists in a physical milieu distinct from that in which it occurs in nature. For example, the isolated material may be substantially isolated (for example purified) with respect to the complex cellular milieu in which it naturally occurs, particularly in the context of the libraries of the invention.

When *purified* material of the invention is specified herein the absolute level of purity is not critical and those skilled in the art can readily determine appropriate levels of purity according to the use to which the material is to be put. Preferred, however, are purity levels of 90% w/w or 99% w/w or higher.

In some circumstances, the isolated phytochemical forms part of a composition (for example a more or less crude extract containing many other substances) or buffer system, which may for example contain other components. In other circumstances, the isolated phytochemical forms part of an article or kit-of-parts, such as a photochemical library. In yet other circumstances, the isolated phytochemical may be purified to essential homogeneity, for example as determined spectrophotometrically, by NMR or by column chromatography (for example HPLC).

The term *screening* as applied herein to any subject sample (e.g. a plant, and extract, a fraction or a phytochemical) is intended to mean the analysis of the subject in order to determine whether it meets one or more predetermined criteria. As applied to the screening of phytochemicals for biological activity, it also covers virtual screening (which uses computer modelling or analogous predictive methods in order to determine whether the subject meets certain functional criteria).

As used herein, the term *index of biological activity* is intended to define a characteristic or property which is correlated with a biological activity. For example, a particular constellation of reactive groups on a phytochemical may be used as a marker of toxicity, while the ability to interact with a particular receptor *in vitro* may be an index of pharmaceutical activity.

The term *profiling* as applied herein to any subject (e.g. a plant or extract or fraction thereof) is intended to mean the analysis of the subject in order to define a set of properties and/or features which together are characteristic of that subject. Such a set of properties and/or features may also be referred to as a *chemical fingerprint.* The properties may include any or all of the properties discussed herein (under the section "Fraction characterization"), and typically include spectral characteristics such as mass spectra and/or PDA spectra.

As used herein the terms *polar* and *non-polar* are applied as relative terms to solvents to indicate the degree to which they have an electric dipole moment and so display hydrophilicity (polar) or hydrophobicity (non-polar). They are used to extract polar and non-polar phytochemicals, respectively.

The term *library* is applied herein to phytochemicals to define an ordered array of isolated fractions (which contain a plurality of discrete phytochemicals) and/or isolated phytochemicals. In the case of libraries of isolated fractions, each fraction preferably contains 2 to 5, for example 5-10 and preferably up to 50 different phytochemicals).

As used herein the term *phytochemical directory* is intended to define a database which comprises information on the distribution of one or more phytochemical(s) of interest within a population of different plant sources. For example, the directories of the invention may comprise information on the distribution of certain polar chemicals within a collection of different plants.

As used herein, the term *single botanical reference source* is intended to define a particular plant taxon. In most cases the term defines a single plant species (or variety). The term may also be extended to further define a particular species grown in a specific location or under particular defined conditions.

The term *biological screening* is used herein to mean any method used to detect biological activity of a sample, including in vivo and *in vitro* testing and bioassays.

The term *high throughput screening* means a screening method able to test a relatively large number of samples in a relatively short period of time. Generally, high throughput systems are automated and require little human intervention.

### Plant material

The plant material used in the process of the present invention may be fresh, unprocessed material or may be pre-processed in any of a wide variety of ways prior to extraction and fractionation.

Pre-processing may involve physical or chemical pre-processing, for example compressing, powdering, grinding, freezing, drying or milling. The plant material may also comprise, consist of, or be derived from a plant extract (e.g. an infusion or tincture) or a plant fraction (e.g. a milling fraction).

Preferably, the plant material is dried prior to use. Any convenient form of drying may be used, including freeze-drying, spray drying or air drying. In particularly preferred embodiments, the plant material for use as starting material in the process of the invention is pre-processed by milling and freeze-drying (preferably of freshly-harvested plant material). Tinctures or processed extracts may be used directly without drying.

The plant source material comprises, consists of, or is derived from a whole plant or from part of a plant. In cases where a particular plant part is selected for use as the starting material in the process of the invention, the plant part may for example be selected from the root, tuber, stem, bark, leaf, bud, flower, fruit, sap, exudate, canker, gall, scab, nodule, juice, seed or combinations or derivatives thereof.

### Source selection

Any natural source may be used in the process of the present invention, including (without limitation) plants (for example temperate plants, tropical plants, herbs, medicinal plants, fungi, terrestrial plants, aquatic plants, ethnopharmacological plants and poisonous plants), microbes (for example bacterial cultures) or insects. In some cases the source may be mammalian, for example human. In the latter case the source may be a tissue (e.g. blood or brain) sample, such sources being of particular importance in pharmacokinetic and pharmacotoxicology applications.

Although much attention in the last two decades has focused on tropical plants as sources of new natural products for potential pharmaceutical and agrochemical use, temperate plants have provided most of the commercially valuable plant compounds identified. These include etoposide (an anti-cancer agent) from *Podophyllum* spp., artemisinin (an anti-malarial agent) from *Artemisia annua* (Annual Mugwort) and Taxol^{™} from Taxus spp. (Yew trees). Taxol^{™} as a treatment for ovarian cancer is now in the top 30 best selling drugs.

Thus, preferred plant sources for use in the process of the present invention are temperate plants, including both wild and cultivated plants.

Like tropical plants, temperate plants produce large numbers of biologically active metabolites for protection from herbivores and pathogens and in response to wind and temperature damage. The seasonal nature of the selective pressures and short growing season may also lead to changes in production of chemical defences during the year.

Thus, in a preferred aspect the present invention uses stressed plants, preferably stressed temperate plants, as sources for the plant material used in the invention. In this context, the term "stressed plant" means one which has been subjected to stress prior to harvesting and use as starting material in the process of the invention, for example as a result of pathogen (e.g. insect, fungal, nematode, viral or microbial) attack, physical trauma (such as wind damage, abrasion, cutting or crushing) or environmental insult (such as drought or heat).

### Solvent extractions

Suitable polar solvents for use in the process of the invention include without limitation organic solvents such as organic alcohols. Preferred are ethanol and methanol, as well as ethanol/water or methanol/water mixtures.

Preferably, the polar solvent is selected from 51 to 80% ethanol/water, 31 to 50% ethanol/water, and up to 30% ethanol/water. Particularly preferred is a polar solvent which is approximately 50% ethanol/water.

Suitable non-polar solvents for use in the process of the invention include without limitation organic solvents such as hexane and dichloromethane (DCM) or chloroform. Particularly preferred is dichloromethane.

The conditions (time, temperature, degree of agitation etc.) under which the extraction(s) are performed can be readily determined empirically and vary according to the nature of the plant or plant part, the nature of any pre-processing and the solvent system selected.

### Chromatographic fractionation of the enriched extract

As described above, the process of the invention produces an extract enriched in ionic-compounds which is chromatographically fractionated to yield one or more polar fractions comprising one or more ionic phytochemical(s).

This chromatographic fractionation of the enriched extract may be carried out on an analytical scale. Analytical scale fractionation is useful in profiling, quality control, screening, specification (quality control) applications and in the preparation of libraries and directories where relatively small amounts of material are required.

Chromatographic fractionation on an analytical scale preferably comprises gas-liquid chromatography. Gas-liquid chromatography is a process whereby a complex mixture of volatile substances is separated into its constituents by partitioning the sample between an inert gas under pressure and a thin layer of non-volatile liquid coated on an inert support inside a heated column. In order to achieve a good separation of specific compounds in a mixture, it is crucial to use a column with the correct characteristics. The nature of the solid support, type and amount of liquid phase, method of packing, overall length and column temperature are important factors.

Those skilled in the art, by routine trial and error and by using common general knowledge, will be able readily to determine the appropriate column characteristics according to the circumstances, including *inter alia* the plant under study and the nature of the solvent used in the extraction. Particularly preferred, and useful in many circumstances, are capillary columns coated with a non-polar liquid phase (25m x 0.22mm id x 0.25 µm BPX5 stationary phase, produced by SGE Ltd., or equivalents thereof).

Many compounds are unsuitable for direct injection into a gas chromatograph because of their high polarity, low volatility or thermal instability. Compounds that are highly hydroxylated are difficult to vapourise because of inter-molecular hydrogen bonding. However, by replacing the hydroxyl hydrogens with other chemical groups, they can be made sufficiently volatile for GC analysis.

The two most popular means of derivatising hydroxyl groups are acetylation and silylation, where acetylates [CH₃CO-O-R] or silyl ethers, e.g. trimethylsilyl (TMS) ethers [(CH₃)₃Si-O-R] are formed.

Thus, in embodiments where the enriched extract is chromatographically fractionated on an analytical scale the phytochemical constituents of the enriched extract are preferably derivitized, for example by acylation or silylation. Particularly preferred is trimethyl silyl (TMS) derivitization.

The chromatographic fractionation of the enriched extract may also be carried out on a preparative scale. This is useful when the process of the invention is applied to the production of plant extracts and isolated phytochemicals.

Chromatographic fractionation of the enriched extract on a preparative scale preferably comprises ion exchange chromatography. Ion-exchange chromatography partially purifies ionic species to concentrate them and remove contaminating substances. Those skilled in the art, by routine trial and error and using common general knowledge, will be able readily to identify suitable column packing materials and mobile phase(s), which will depend *inter alia* on the quantities to be fractionated, the plant material under study and the nature of the solvent used in the extraction.

Particularly preferred in the methods of the present invention are strongly acidic cation exchange resins which can be used in either the free acid or hydrogen (H⁺) form or in the ammonium (NH₄⁺) salt form). These forms adsorb cations from solution and release an equivalent number of counter-ions back into solution (either H⁻ or NH₄⁺ ions, depending on the form used).

When used on a preparative scale, anion exchange chromatography and/or adsorption chromatography may also be used.

### Chromatographic fractionation of the scavenged extract

The optional scavenging process of the invention produces a scavenged non-ionic extract depleted in sugars which is chromatographically fractionated to yield one or more scavenged fractions comprising one or more non-ionic phytochemical(s).

The chromatographic fractionation of the scavenged extract may be carried out on an analytical scale. Analytical scale fractionation is useful in profiling, screening, specification (quality control) applications and in the preparation of libraries and directories where relatively small amounts of material are required.

Chromatographic fractionation on an analytical scale preferably comprises high performance liquid chromatography (HPLC). With this technique, samples are dissolved in a suitable solvent and separated on a column using a solvent mixture that is pumped under pressure through the column. Those skilled in the art, by routine trial and error and using common general knowledge, will be able readily to identify suitable column packing materials, pumping pressures, flow rates and mobile phase(s) which will depend *inter alia* on the quantities to be fractionated, the plant material under study and the nature of the solvent used in the extraction.

Chromatographic fractionation on a preparative scale preferably comprises flash fractionation (e.g. normal phase flash fractionation) in conjunction with (e.g. followed by) high performance liquid chromatography (HPLC) (e.g. reverse phase HPLC). Flash fractionation is a form of preparative column chromatography which involves the application of pressure to speed solvent flow and can be carried out with a wide variety of supports.

The fractionation may also comprise gas-liquid chromatography (as described above in the section relating to fractionation of the enriched extract).

### Chromatographic fractionation of the depleted extract

The optional non-polar fractionation process of the invention comprises subjecting a non-polar extract to hydrophobic interaction or reversed-phase chromatography to produce an extract depleted in fats and chlorophyll and chromatographically fractionating the depleted extract to yield one or more non-polar fractions comprising one or more non-polar phytochemical(s).

The chromatographic fractionation of the depleted extract may be carried out on an analytical scale. Analytical scale fractionation is useful in profiling, screening, specification (quality control) applications and in the preparation of libraries and directories where relatively small amounts of material are required.

Chromatographic fractionation on an analytical scale preferably comprises high performance liquid chromatography (HPLC), although gas-liquid chromatography may also be used as an alternative or in conjunction with the HPLC.

Chromatographic fractionation on a preparative scale preferably comprises flash fractionation (e.g. normal phase silica chromatography) in conjunction with (for exampled followed by) high performance liquid chromatography (HPLC) (e.g. reverse phase HPLC), , as described above.

In the case of polar chemicals, fractionation may comprise ion exchange chromatography (for example cation and/or ion-exchange chromatography) and/or adsorption chromatography (for example neutral alumina chromatography).

### Fraction collection and isolation

When the process of the invention is applied *inter alia* to the production of a library of phytochemicals or to the production of an isolated phytochemical, some or all of the fractions are collected and isolated.

Fraction collection may be conducted by an automated detection system or by manual or automated time-dependent collection. Collection criteria may be determined by collection of predetermined volumes of eluent, collection of specific solvent eluents, collection of specific fractions based on a detection system (for example MS or electrochemical detection), or any other predetermined criterion. Automated systems are preferably able to track each individual sample, including the origin, the separation method and collection criterion used.

### Fraction ordering and arraying

Isolated fractions may be distributed in an ordered array on a physical support medium having discrete locations for individual fractions. The physical support medium may be, for example, a microtitre plate or a capsule. The isolated fraction may be dried (e.g. freeze dried).

Preferably, each collected and isolated fraction is associated with an identifier on the physical support medium. The identifier may be, for example, a bar code or row and column location. The identifiers for each fraction in the array are stored in an associated data array. The data array identifies the source of each fraction and all of the conditions used in its preparation such as the column or columns used in removing interferences, the column used for separation, the chromatography conditions, the collection criteria and the physical location of the samples on the support medium. Conveniently, a database is established containing the data arrays so recording the physical array of fractions.

### Physical state of the fractions

The physical state of the fractions depends on the fractionation technique used in its preparation and will vary depending on the application and the chemical components.

In certain embodiments (for example in the phytochemical libraries of the invention), an isolated phytochemical is essentially the sole phytochemical in any given isolated fraction. However, in some cases the libraries of the invention comprises isolated fractions which contain a plurality of different phytochemicals, for example less than about 100, preferably less than about 15 but most preferably no more than about 5 different phytochemicals.

Particularly preferred are fractions containing isolated or purified phytochemicals, e.g. purified to about 90% purity (for example to over 90% or to over 99%, purity).

### Fraction characterization

In many applications of the process of the invention, the fractions are subjected to some form of characterization. The form the characterization takes depends on the nature of the application and the characterization techniques employed.

In general, any or all of the following approaches may be used:

### (a) Functional characterization

This form of characterization is particularly useful in applications where the process of the invention is applied to the screening of a plant for the presence of biologically active phytochemicals. However, it may also be used in the preparation of customized phytochemical libraries, in profiling, screening, specification (quality control) applications and in the preparation directories, defined extracts and isolated bioactive phytochemicals.

The functional characterization may comprise a biological assay. Biological assays may be carried out *in vivo* or *in vitro,* and may include enzyme inhibition assays (for example glycosidase and/or lipase inhibition). Other biological assays include receptor binding assays, cellular assays (including cell replication, cell-pathogen and cell-cell interaction and cell secretion assays), immunoassays, anti-microbial activity (e.g. bacterial and viral cell-binding and/or replication) assays and toxicity assays (e.g. LD₅₀ assays).

### (b) Physical characterization

This form of characterization may usefully supplement the process of the invention in all applications. It can take the form of quantification of the phytochemical component(s) present in any given fraction or at any other stage in the process, measurement of the purity of the constituents, determination of molecular weight (or molecular weight distribution or various statistical functions thereof in the case of fractions which comprise a plurality of different phytochemical constituents), determination of the molecular formula(e) (e.g. by nuclear magnetic resonance) in the case of purified single chemicals and various spectral analyses.

Particularly useful spectral characteristics include:
- Mass spectra (e.g. the mass to charge (m/z) value versus abundance), and/or
- Chromatographic data(e.g. spectra, column retention times, elution profiles etc.), and/or
- Photodiode array (PDA) spectra (e.g. in both UV and visible ranges), and/or
- Nuclear magnetic resonance (NMR) spectra (including spectral data sets obtained *via* ¹H and/or ¹³C NMR).

Spectral characterization can be coupled with the fractionation step. For example, GC-MS and HPLC-PDA-MS can be used (as described herein) to couple the fractionation with the obtention of mass spectral, UV-visible spectral and chromatographic data.

Any or all of the above characteristics can be used to define a "chemical fingerprint" for any given plant (or any fraction or phytochemical constituent thereof).

### (c) Chemical characterization

This form of characterization may usefully supplement the process of the invention in all applications. It can take the form of measurements *inter alia* of the chemical reactivity of phytochemical constituent(s), their solubility, stability and melting point.

### Plant profiling

Plant profiling typically involves the analysis of a single plant species to define a large set of properties (typically between 10 and 100) which relate to its phytochemical constituents. For example, a typical plant profile would comprise the mass and PDA spectra of a large collection (typically greater than 10, preferably greater than 50, and often greater than 100) of fractionated extracts from that plant.

Plant profiling may also involve the analysis of a single plant species to detect the presence of a defined set of chemicals. Such profiling techniques may also be applied to plant extracts (and fractions thereof) in which case the profile may comprise spectral data relating to a collection of phytochemical constituents (typically greater than 5, preferably greater than 10, often greater than 20).

Plant extracts and fractions which have been profiled in this way are referred to herein as "defined extracts" and "defined fractions", respectively, since their profile permits a standard specification to be established for that extract/fraction so allowing subsequently produced extracts/fractions to be tested for compliance with the standard specification. This is particularly useful in cases where the process of the invention is applied to the bulk production of extracts, fractions or phytochemical compositions where batch-to-batch variation must be kept to a minimum.

The profiling techniques can be applied to a reference plant, extract, fraction or composition comprising purified phytochemicals in order to establish a "standard specification". The "standard specification" is a set of properties (or profile) characteristic of the reference. The reference in each case is selected on the basis of being representative in terms of function(s), composition and/or purity. The standard specification can therefore be used in quality control procedures in order to determine the extent to which a test subject (e.g. plant, extract or fraction thereof or phytochemical composition derived therefrom) meets the standard specification.

Such techniques are of great value in quality control procedures, particularly in the production of defined extracts, phytochemical compositions and medicinal plant products.

### Phytochemical libraries

The phytochemical libraries obtainable according to the processes of the invention comprise a comprehensive ordered array of phytochemicals, preferably in a form suitable for screening (e.g. for high throughput screening). Particularly preferred are libraries which are suitable for use in screens for biological activity.

The array may be in the form of a solid support comprising samples of the isolated and collected fractions arrayed thereon or therein. Any suitable solid support may be used.

Particularly preferred are containers (for example, capsules, tubes or vials), membranes or plates (for example microtitre plates). The samples may be dried and/or adsorbed to the solid support.

The fraction/phytochemical isolate array is preferably associated with data. The data may, for example, identify the plant source and process conditions used to obtain the fraction or phytochemical isolate.

The invention will now be described with reference to specific examples. These are for illustrative purposes only, and are not intended to be limiting in any way to the scope of the monopoly claimed or the invention described.

### Exemplification

### Binding of ionic species

10g of dried plant material is put into a 250ml conical flask then enough 50% ethanol/water added to soak the plant material, allowing 2cm extra solvent on top. This is left for 15 hours or overnight to extract.

The extract is filtered using a Buchner funnel. The plant material is either discarded or kept for sequential extraction with dichloromethane (DCM). Preferably new dried material is used for the DCM step but if insufficient is available, a sequential extraction can be performed or might be used to further characterize the components).

Dowex 50 resin (50-100 mesh) is prepared by adding excess 2N HCl and soaking for a minimum of 15 minutes. The resin is then washed with excess deionized water to pH 7. The prepared resin is poured into 10x1cm columns and reservoirs attached. The columns are washed with 25ml of 50% aqueous ethanol to equilibrate the resin with the same solvent as used to prepare the plant samples.
For each column, the reservoir is filled with the extract which is allowed to pass slowly through the resin.

Fractions of approximately 30ml of the unbound sample are collected in a large vial, labelled and kept for HP-20 scavenging. The pH of the eluent is monitored which should be around 1 or 2. If it rises to 6 or 7 then the resin is exhausted. If this should happen, a little more resin is added to the top of the column and if necessary the whole sample is applied to the column again to ensure binding of all of the ionic components. After all of the sample has been applied to the column, it is washed with 75ml of 50% aqueous ethanol followed by 75ml of water. These washings are discarded. The water is used to remove the alcohol prior to eluting the bound constituents.

The column is eluted with 100ml of 2N ammonium hydroxide and this is collected in a 250ml round bottom flask. This is evaporated to 3-5ml on a rotary evaporator at less than 40°C and transferred to a weighed 7ml vial. The drying is completed by blowing down with nitrogen and/or freeze drying. Care is taken to dry the samples on the same day and not to leave them sitting in the ammonia solution longer than necessary (typically less than 15 minutes) as compound degradation could otherwise occur. 1-3 mg of each dried sample is placed in GC vials and freeze dried again prior to analysis.

### Scavenging of Non-Ionic Species

This process utilises the unbound material from the Dowex 50 columns described above.

30ml of the unbound extract from a Dowex 50 column is collected in a large vial. A Sep-pak vacuum manifold is used with a Sep-pak cartridge (these contain HP-20 resin). The Sep-pak cartridges can be modified using a 5ml pipette tip to make a larger column.

A large vial or small beaker is placed under the cartridge to collect the waste. 5ml of the sample is loaded onto the Sep-pak cartridge. A gentle vacuum is applied to pull the sample through the cartridge at a steady drip. Once the sample has been loaded onto the HP-20 resin in the cartridge, the column is washed with 3ml of 25% methanol in water. This is collected in the same beaker/vial and the contents are then discarded. The purpose of this wash is to remove most of the sugars from the resin prior to elution. These are unwanted common metabolites that are generally present in large amounts in the aqueous ethanol plant extracts and if not removed these would interfere with the analysis of the samples.

The column is eluted with 5ml of 10% acetone in methanol and this sample is collected in a weighed 7ml vial. The sample is dried under vacuum and then freeze dried if necessary.

The vial is reweighed and the sample made up to 10mg/ml in methanol. 150µl of the sample is transferred into a labelled HPLC and GC vials for analysis.

### Extraction of Non-Polar Components

A filter paper thimble is constructed and 10g of dried and ground plant material added or plant material dried after the removal of ionic chemicals. A few glass beads are placed in a 500ml round-bottom flask which is then placed in a heating mantle and 200ml of dichloromethane (DCM) added. The sample thimble is placed in a Soxhlet tube and this is attached to the round-bottom flask. 150ml of DCM is added to the sample in the Soxhlet tube. A condenser is placed on the top of the Soxhlet apparatus and the cooling water turned on. The heating mantle is switched on ensuring that a steady refluxing rate is established. At the end of the extraction the heating mantle is switched off. The system is allowed to cool for a further 30 minutes before turning off the water.

After allowing the extract to cool to ambient temperature, the Soxhlet apparatus is dismantled allowing any DCM remaining in the Soxhlet itself to siphon into the flask. The flask is removed from the mantle. 100ml of HP-20 resin is placed in a labelled 1000ml round-bottom flask and the DCM extract is then added. The HP-20 / extract is evaporated under vacuum on a rotary evaporator set at less than 40°C until dry. The dried resin is transferred to a 250ml conical flask and eluted with 3x100ml of 10% acetone in methanol. The solution is decanted through a filter into a pre-weighed 500ml round-bottom flask and rotary evaporated until dry. The round-bottom flask is re-weighed to determine the extract weight and the material is then made up to 10mg/ml in methanol and transferred to a labelled vial. The extract is filtered prior to analysis by HPLC-PDA/MS and GC-MS.

### Notes

### (a) HP-20 Resin

Diaion HP-20 (manufactured by Sumitomo Ltd) is a styrene-divinylbenzene polymer resin. It is hydrophobic and adsorbs lipophilic compounds and weak acids. The synthetic adsorbent HP and SP series are insoluble three-dimensional crosslinked polymers with macropores. They do not possess ion exchange or other functional groups, however they have a large surface area and are able to absorb a variety of organic substances by means of van der Waals' forces. The polymer matrix can be classified as either the aromatic (styrene-divinylbenzene) type or the acrylic (methacrylic) type.

Once compounds are adsorbed they can be washed off the resin by the application of a suitable solvent. HP-20 is used in the following manner to remove excessive amounts of fats and chlorophyll from dichloromethane (DCM) extracts of plants.

The solubilised extract is dried under vacuum onto the resin. The resin is eluted with methanol containing increasing amounts of acetone (up to 30% acetone). This is enough to wash off all compounds of interest whilst leaving fats and chlorophylls adsorbed onto the HP-20 resin. The HP-20 resin is cleaned for re-use by washing with acetone and hexane. This washes off all unwanted compounds and the resin can be used once again after a final wash with methanol.

For the scavenging of non-ionic components, the constituents of the extracts are more polar (water-soluble) than those in the dichloromethane extracts. Therefore, the HP-20 resin is used in a slightly different manner to separate sugars from the compounds of interest by washing these off the resin first using 25% methanol in water prior to the elution of the remaining bound material using 10% acetone in methanol. The key to the different uses of HP-20 resin lies in the polarity of the solvent systems used to-elute the material adsorbed onto it.

### (b) Ion Exchange Chromatography

The ion exchange step allows concentration of ionic species to concentrate them and remove contaminating substances that could interfere with their analysis. Samples are initially processed by extraction using approximately 50% aqueous alcohol, which separates the polar constituents from the more non-polar components of each plant and denatures any proteins that may be present in the extract. The extracts are then processed by ion exchange chromatography which separates and concentrates the ionic compounds in each extract (predominantly alkaloids, amino acids and small amines) from the non-ionic compounds which would also be present in the extracts (mainly sugars, fats and most of the phenolic compounds). The samples are then analysed in enzyme assays, by GC-MS or HPLC.

The filtered extracts are loaded onto Dowex 50W-X8 resin, which is a polystyrene resin cross-linked with divinylbenzene. It is a strongly acidic cation exchanger which can be used in either the free acid or hydrogen (H⁺) form or in the salt form e.g. ammonium (NH₄⁺) salt. Both forms of the resin adsorb cations from solution and release an equivalent number of counter-ions back into solution (either H⁺ or NH₄⁺ ions, depending on the form of the resin used). In the H⁺ form, Dowex 50W-X8 resin adsorbs all ionic compounds from solution (except very strong acids), regardless of their charge, and this is the preferred form.

On adsorption of cations from the extract, protons are displaced from the resin causing the pH of the eluate to fall from pH 6.0 (the pH of the distilled water used to rinse the resin prior to use) to approximately pH 2.0, depending on the concentration of the sample. The more dilute the sample, the smaller the drop in pH. However, once the resin capacity has been reached, continued sample loading causes the pH to rise to that of the crude extract itself.

The Dowex 50W-X8 resin (50-100 mesh size) is prepared for use by washing with 2N HCl to ensure complete conversion to the H⁺ form. The excess acid is removed by extensive rinsing with distilled water. After the crude extract has been loaded onto the resin, the column is washed with distilled water to remove any unbound material until the pH of the eluate rises to that of the water itself. The bound compounds are eluted with a 2N solution of ammonium hydroxide (NH₄⁺OH⁻). The column is washed to pH 6.0 with water and the ammonia is removed from the sample by evaporation under reduced pressure at 40°C using a rotary evaporator.

The material not bound by the ion exchange resin is reduced in volume by evaporation under reduced pressure for HP-20 scavenging of chemicals.

### (c) Gas Chromatography - Mass Spectrometry (GC-MS)

This technique is used to detect and quantify the constituents of the enriched, scavenged and depleted extracts.

Gas-liquid chromatography is a process whereby a complex mixture of volatile substances is separated into its constituents by partitioning the sample between an inert gas under pressure and a thin layer of non-volatile liquid coated on an inert support inside a heated column. In order to achieve a good separation of specific compounds in a mixture, it is crucial to use a column with the correct characteristics. The nature of the solid support, type and amount of liquid phase, method of packing, overall length and column temperature are important factors. Preferably capillary columns coated with a non-polar liquid phase (25m x 0.22mm id x 0.25µm BPX5 stationary phase, produced by SGE Ltd.) or equivalents thereof are used.

Many compounds are unsuitable for direct injection into a gas chromatograph because of either their high polarity, low volatility or thermal instability. Compounds that are highly hydroxylated are difficult to vapourise because of inter-molecular hydrogen bonding. However, by replacing the hydroxyl hydrogens with other chemical groups, they can be made sufficiently volatile for GC analysis. The two most popular means of derivatising hydroxyl groups are acetylation and silylation, where acetylates [CH₃CO-O-R] or silyl ethers, e.g. trimethylsilyl (TMS) ethers [(CH₃)₃Si-O-R] are formed. Preferred is the silylation of samples prior to analysis using Sigma Sil A (a mixture of trimethylchlorosilane, hexamethyldisilazane and pyridine 1:3:9) produced by the Sigma Chemical Company. Derivatisation is achieved by the addition of 100µl of Sigma Sil A to each mg of dried material in a sealed vial (the reagent degrades in the presence of water) and the reaction is completed by heating the samples at 60°C for 15 minutes.

The trimethylsilyl ethers in each derivatised sample are separated on the column using a temperature programme. A temperature programme is used as this allows the rapid separation of compounds of a very wide boiling range.

In electron impact mass spectrometry the effluent from the gas chromatograph, which contains the separated and vaporised compounds, is passed into the ion chamber of the mass spectrometer which is under a high vacuum. The molecules are bombarded by a beam of electrons accelerated from a filament which ionises and fragments them. Initially, one electron is removed from each molecule to form a positively charged molecular ion (M⁺, i.e. a radical cation). Breakage of bonds relative to bond strength occurs rapidly in the molecular ion to generate fragment ions. The manner in which molecules fragment is highly characteristic and can be used as a form of 'fingerprint' identification. The various ions are accelerated into the analyser portion of the mass spectrometer where they are sorted according to their mass to charge ratios (m/z values) which are equivalent to the molecular weights of the fragments. The ion signal is amplified by an electron multiplier and the mass spectrum is plotted from low to high mass. The m/z values are plotted against relative abundance of the ions to give the visual 'fingerprint' .

### (d) HPLC-PDA/MS/ELS (evaporative light scattering detection)

This technique is used to detect and quantify the constituents of the scavenged and depleted extracts. With this technique, samples are dissolved in a suitable solvent and separated on a column using a solvent mixture that is pumped under pressure through the column. Three detectors are used; a mass spectrometer, as described above, and a photodiode array system that measures whether the compounds absorb light at wavelengths in both the UV and visible ranges.

In the examples described above, a Waters Integrity^{™} HPLC-PDA/MS system fitted with a reverse phase C₈ HPLC column (50mm x 2.1 mm id x 3.5 µm, Waters) was used. The rate of solvent flow through the column was 0.35ml/min and a linear gradient starting at 90% water and 10% acetonitrile (containing 0.01% trifluoroacetic acid) was used, rising to 100% acetonitrile over 6 minutes and held for a further 6.5 minutes.

Absorbance (photodiode array - PDA) data was collected from 200-600nm and mass spectral data collected between 71 and 600m/z.

### Equivalents

The foregoing description detail presently preferred embodiments of the present invention. Numerous modifications and variations in practice thereof are expected to occur to those skilled in the art upon consideration of these descriptions. Those modifications and variations are intended to be encompassed within the claims appended hereto.

## Claims

1. A process comprising the steps of:
(a) providing a natural material e.g. plant;
(b) extracting a first sample of the material with a polar solvent to produce a polar extract and a non-polar residue;
(c) subjecting the polar extract of step (b) to ion-exchange chromatography to produce an extract enriched in ionic-compounds and a non-ionic residue;
(d) chromatographically fractionating the enriched extract of step (c) to yield one or more polar fractions comprising one or more ionic (phyto)chemical(s).

2. The process of claim 1 further comprising in addition to steps (a) to (d): (i) extracting a second sample of the material or sequentially extracting the non-polar residue of the first sample with a non-polar solvent to produce a non-polar extract; (ii) subjecting the non-polar extract to hydrophobic interaction or reversed-phase chromatography to produce an extract depleted in fats and chlorophyll; and (iii) chromatographically fractionating the depleted extract to yield one or more non-polar fractions comprising one or more non-polar phytochemical(s).

3. The process of claim 1 or claim 2 further comprising scavenging the non-ionic residue for non-ionic species by: (i) subjecting the non-ionic residue of step (c) to hydrophobic interaction or reversed-phase chromatography to produce a scavenged non-ionic extract depleted in sugars; and (ii) chromatographically fractionating the scavenged extract to yield one or more scavenged fractions comprising one or more non-ionic phytochemical(s).

4. The process of any one of claims 1 to 3 for producing a library of phytochemicals, further comprising the steps of collecting and isolating the fractions and ordering and arraying the isolates, wherein the process is applied iteratively to a series of different plant source materials.

5. The process of any one of claims 1 to 3 for producing a phytochemical profile of a plant, further comprising the step of characterizing the fraction(s).

6. The process of claim 5 for establishing a standard specification for a medicinal plant material, the process further comprising the steps of characterizing the fraction(s) and defining a standard specification for the said plant material on the basis of the characteristics defined.

7. The process of any one of claims 1 to 3 for:
(a) preparing a plant extract, wherein the fractionation step(s) comprise preparative chromatography; or
(b) producing an isolated phytochemical, further comprising the steps of collecting the fraction(s) and isolating the phytochemical therefrom; or
(c) screening a plant for the presence of a biologically active phytochemical, further comprising the step of characterizing the fraction(s) to yield an index of biological activity; or
(d) producing a phytochemical directory wherein the plant source material is derived from a single botanical reference source and the process further comprises an iterative cycle of the following steps: (i) characterizing the fraction(s); (ii) determining whether the **characterized** fraction(s) contain a phytochemical of interest, thereby obtaining data; (iii) associating the data obtained in (ii) with the botanical reference source to produce a phytochemical directory component, whereby iteration of the steps (i) to (iii) with a plurality of different botanical reference sources produces a plurality of directory components and thereby forms a phytochemical directory.

8. The process of any one of the preceding claims wherein the fraction(s) are **characterized**:
(a) functionally; and/or
(b) physically; and/or
(c) chemically.

9. The process of claim 8 wherein:
(a) the functional characterization comprises a biological assay selected from:
I. *in vivo* or *in vitro* assays; and/or
II. enzyme inhibition assays (e.g. glycosidase and/or lipase inhibition); and/or
III. receptor binding assays; and/or
IV. cellular assays (e.g. cell replication, cell-pathogen, cell-cell interaction and cell secretion assays); and/or
V. immunoassays; and/or
VI. anti-microbial activity (e.g. bacterial and viral cell-binding and/or replication) assays; and/or
VII. toxicity assays (e.g. LD₅₀ assays);
(b) the physical characterization is selected from:
I. quantification of the phytochemical component(s); and/or
II. measurement of the purity of the constituents; and/or
III. determination of molecular weight (or molecular weight distribution or various statistical functions thereof in the case of fractions which comprise a plurality of different phytochemical constituents); and/or
IV. determination of the molecular formula(e) (e.g. by nuclear magnetic resonance); and/or
V. spectral analysis;
(c) the chemical characterization comprises measurements of:
I. the chemical reactivity of phytochemical constituent(s); and/or
II. the solubility of phytochemical constituent(s); and/or
III. the stability and melting point of phytochemical constituent(s).

## Patentansprüche

1. Verfahren, das die folgenden Schritte umfasst:
(a) Bereitstellen eines natürlichen Materials, beispielsweise einer Pflanze;
(b) Extrahieren einer ersten Probe des Materials mit einem polaren Lösungsmittel zur Erzeugung eines polaren Extraktes und eines nicht-polaren Rückstandes;
(c) Unterwerfen des polaren Extraktes von Schritt (b) einer Ionen-Austauscherchromatographie, um einen Extrakt zu erzeugen, der bezüglich ionischer Verbindungen angereichert ist, und einen nicht-ionischen Rückstand;
(d) chromatographisches Fraktionieren des angereicherten Extraktes aus Schritt (c), um eine oder mehrere polare Fraktionen zu gewinnen, die eine oder mehrere ionische (Phyto-)Chemikalie umfassen.

2. Verfahren nach Anspruch 1, das weiterhin zusätzlich zu den Schritten (a) bis (d) Folgendes umfasst: (i) Extrahieren einer zweiten Probe des Materials oder sequentielles Extrahieren des nicht-polaren Rückstandes der ersten Probe mit einem nicht-polaren Lösungsmittel zur Erzeugung eines nicht-polaren Extraktes; (ii) Unterwerfen des nicht-polaren Extraktes einer hydrophoben Wechselwirkung oder Umkehrphasenchromatographie zur Erzeugung eines Extraktes, der bezüglich Fetten und Chlorophyll abgereichert ist; und (iii) chromatographisches Fraktionieren des abgereicherten Extraktes, um eine oder mehrere nicht-polare Fraktionen zu gewinnen, die eine oder mehrere nicht-polare Phytochemikalien umfassen.

3. Verfahren nach Anspruch 1 oder Anspruch 2, das weiterhin das Aufreinigen des nicht-ionischen Rückstands für die nicht-ionische Spezies durch Folgendes umfasst: (i) Unterwerfen des nicht-ionischen Rückstandes von Schritt (c) gegenüber einer hydrophoben Wechselwirkung oder Umkehrphasenchromatographie zur Erzeugung eines aufgereinigten nicht-ionischen Extraktes, der bezüglich Zuckern abgereichert ist; und (ii) chromatographisches Fraktionieren des aufgereinigten Extraktes, so dass sich eine oder mehrere aufgereinigte Fraktionen ergeben, die ein oder mehrere nicht-ionische Phytochemikalien umfassen.

4. Verfahren nach einem der Ansprüche 1 bis 3 zur Erzeugung einer Bibliothek von Phytochemikalien, das weiterhin die Schritte umfasst, die Fraktionen zu sammeln und zu isolieren, und die Isolate zu ordnen und einem Array zu unterwerfen, wobei das Verfahren schrittweise auf eine Reihe von unterschiedlichen Materialien aus pflanzlicher Quelle angewandt wird.

5. Verfahren nach einem der Ansprüche 1 bis 3 zur Erzeugung eines phytochemischen Profils einer Pflanze, das weiterhin den Schritt der Charakterisierung der Fraktion(en) umfasst.

6. Verfahren nach Anspruch 5 zur Etablierung einer Standardspezifikation für ein medizinisches Pflanzenmaterial, wobei das Verfahren weiterhin die Schritte umfasst, die Fraktion(en) zu charakterisieren und eine Standardspezifizierung für das Pflanzenmaterial auf Basis der definierten Eigenschaften zu definieren.

7. Verfahren nach einem der Ansprüche 1 bis 3 zum:
(a) Herstellen eines Pflanzenextraktes, wobei der Fraktionierungsschritt (die Fraktionierungsschritte) eine präparative Chromatographie umfassen; oder
(b) Erzeugen einer isolierten Phytochemikalie, die weiterhin die Schritte umfasst, die Fraktion (en) zu sammeln und die Phytochemikalie hiervon zu isolieren; oder
(c) Screenen einer Pflanze bezüglich des Vorhandenseins einer biologisch aktiven Phytochemikalie, weiterhin umfassend den Schritt der Charakterisierung der Fraktion(en), um einen Index der biologischen Aktivität zu gewinnen; oder
(d) Erzeugen eines phytochemischen Verzeichnisses, wobei das Material aus pflanzlicher Quelle aus einer einzigen botanischen Bezugsquelle gewonnen wird und das Verfahren weiterhin einen schrittweisen Zyklus der folgenden Schritte umfasst: (i) Charakterisieren der Fraktion(en); (ii) Bestimmen, ob die charakterisierte Fraktion(en) eine Phytochemikalie von Interesse enthält, wodurch Daten gewonnen werden; (iii) In-Verbindung-Bringen der in (ii) gewonnenen Daten mit der botanischen Bezugsquelle zur Erzeugung einer phytochemischen Verzeichniskomponente, wobei die Wiederholung der Schritte (i) bis (iii) mit einer Vielzahl von botanischen Bezugsquellen eine Vielzahl von Verzeichniskomponenten erzeugt und **dadurch** ein phytochemisches Verzeichnis bildet.

8. Verfahren nach einem der vorhergehenden Ansprüche, wobei die Fraktionen durch Folgendes **gekennzeichnet** sind:
(a) funktionell; und/oder
(b) physikalisch; und/oder
(c) chemisch.

9. Verfahren nach Anspruch 8, wobei:
(a) die funktionelle Charakterisierung einen biologischen Assay umfasst, der aus Folgendem ausgewählt ist:
I. In-vivo- oder In-vitro-Assays; und/oder
II. Enzymhemm-Assays (beispielsweise Glycosidase- und/oder Lipase-Hemmung); und/oder
III. Rezeptorbindungs-Assays; und/oder
IV. Zelluläre Assays (beispielsweise Zell-Replikations-, Zell-Pathogen-, Zell-Zell-Wechselwirkungs- und Zell-Sekretions-Assays); und/oder
V. Immuno-Assays; und/oder
VI. Antimikrobielle Aktivitäts- (beispielsweise bakterielle und virale Zellbindungs- und/oder Replikations-) Assays; und/oder
VII. Toxizitäts-Assays (beispielsweise LD₅₀-Assays);
(b) die physikalische Charakterisierung ausgewählt ist aus:
I. Quantifizieren des phytochemischen Bestandteils (Bestandteile); und/oder
II. Messen der Reinheit der Bestandteile; und/oder
III. Bestimmen des Molekulargewichts (oder der Molekulargewichtsverteilung oder verschiedener statistischer Funktionen hiervon im Falle von Fraktionen, die eine Vielzahl unterschiedlicher phytochemischer Bestandteile umfassen); und/oder
IV. Bestimmung der Molekulargewichtsformel(n) (beispielsweise durch Kernmagnetresonanz); und/oder
V. Spektralanalyse;
(c) chemische Charakterisierung, die folgende Maßnahmen umfasst:
I. die chemische Reaktivität des phytochemischen Bestandteils (der phytochemischen Bestandteile); und/oder
II. die Löslichkeit des phytochemischen Bestandteils (der phytochemischen Bestandteile); und/oder
III. die Stabilität und der Schmelzpunkt des phytochemischen Bestandteils (der phytochemischen Bestandteile).

## Revendications

1. Procédé comprenant les étapes consistant à :
(a) procurer une matière naturelle, par exemple une plante ;
(b) extraire un premier échantillon de la matière dans un solvant polaire pour obtenir un extrait polaire et un résidu apolaire ;
(c) soumettre l'extrait polaire de l'étape (b) à une chromatographie par échange d'ions pour obtenir un extrait enrichi en composés ioniques et un résidu non ionique ;
(d) soumettre à un fractionnement par chromatographie l'extrait enrichi de l'étape (c) pour obtenir une ou plusieurs fractions polaires comprenant un ou plusieurs produits (phyto)chimiques ioniques.

2. Procédé selon la revendication 1, comprenant, en plus des étapes (a) à (d), le fait de : (i) extraire un deuxième échantillon de la matière ou soumettre à une extraction séquentielle le résidu apolaire du premier échantillon dans un solvant apolaire pour obtenir un extrait apolaire ; (ii) soumettre l'extrait apolaire à une chromatographie à polarité de phase inversée ou à une chromatographie hydrophobe pour obtenir un extrait appauvri en graisses et en chlorophylle ; et (iii) soumettre à un fractionnement par chromatographie l'extrait appauvri pour obtenir une ou plusieurs fractions apolaires comprenant un ou plusieurs produits phytochimiques apolaires.

3. Procédé selon revendication 1 ou 2, comprenant en outre le fait de désactiver le résidu non ionique pour une espèce non ionique : (i) en soumettant le résidu non ionique de l'étape (c) à une chromatographie à polarité de phase inversée ou à une chromatographie hydrophobe pour obtenir un extrait non ionique désactivé appauvri en sucres ; et (ii) en soumettant à un fractionnement par chromatographie l'extrait désactivé pour obtenir une ou plusieurs fractions désactivées comprenant un ou plusieurs produits phytochimiques non ioniques.

4. Procédé selon l'une quelconque des revendications 1 à 3, pour préparer une bibliothèque de produits phytochimiques, comprenant en outre les étapes consistant à récolter et à isoler les fractions, et à ordonner et à répartir les isolats, le procédé étant appliqué de manière itérative à une série de différentes matières végétales sources.

5. Procédé selon l'une quelconque des revendications 1 à 3, pour obtenir le profil phytochimique d'une plante, comprenant en outre les étapes consistant à caractériser la ou les fractions.

6. Procédé selon la revendication 5, pour établir une spécification de référence pour une matière de plante médicinale, le procédé comprenant en outre les étapes consistant à caractériser la ou les fractions et à définir une spécification de référence pour ladite matière végétale sur base des caractéristiques qui ont été définies.

7. Procédé selon l'une quelconque des revendications 1 à 3, pour :
(a) préparer un extrait de plante, la ou les étapes de fractionnement comprenant une chromatographie préparative ; ou
(b) préparer un produit phytochimique isolé, comprenant en outre les étapes consistant à récolter la ou les fractions et à en isoler le produit phytochimique ; ou
(c) soumettre une plante à un criblage pour détecter la présence d'un produit phytochimique bioactif, comprenant en outre l'étape consistant à caractériser la ou les fractions pour obtenir un indice d'activité biologique ; ou
(d) préparer un répertoire phytochimique dans lequel la matière végétale source dérive d'une source de référence botanique unique, le procédé comprenant en outre un cycle itératif des étapes suivantes : (i) caractériser la ou les fractions ; (ii) déterminer le fait de savoir si la ou les fractions **caractérisées** contiennent un produit phytochimique d'intérêt, pour ainsi obtenir des données ; (iii) associer les données obtenues sous (ii) à la source de référence botanique pour obtenir un composant de répertoire phytochimique, l'itération des étapes (i) à (iii) avec plusieurs sources de référence botaniques différentes permettant d'obtenir plusieurs composants de répertoire, pour ainsi établir un répertoire phytochimique.

8. Procédé selon l'une quelconque des revendications précédentes, dans lequel la ou les fractions sont **caractérisées** :
(a) d'un point de vue fonctionnel ; et/ou
(b) d'un point de vue physique ; et/ou
(c) d'un point de vue chimique.

9. Procédé selon la revendication 8, dans lequel :
(a) la caractérisation fonctionnelle comprend un dosage biologique choisi parmi le groupe comprenant :
I. des dosages *in vivo* ou *in vitro* ; et/ou
II. des dosages d'inhibition enzymatique (par exemple d'inhibition de glycosidase et/ou de lipase) ; et/ou
III. des dosages de liaison à un récepteur ; et/ou
IV. des dosages cellulaires (par exemple des dosages de réplication cellulaire, d'interaction cellule-agent pathogène, d'interaction cellule-cellule et des dosages de sécrétion cellulaire) ; et/ou
V. des immunodosages ; et/ou
VI. des dosages de l'activité antimicrobienne (par exemple de liaison à une cellule bactérienne et à une cellule virale et/ou de réplication) ; et/ou
VII. des dosages de toxicité (par exemple des dosages de la valeur DL₅₀);
(b) la caractérisation physique est choisie parmi le groupe comprenant :
I. une quantification du ou des composants phytochimiques ; et/ou
II. une mesure de la pureté des constituants ; et/ou
III. une détermination du poids moléculaire (ou de la distribution du poids moléculaire ou de diverses fonctions statistiques de cette dernière dans le cas de fractions qui comprennent plusieurs constituants phytochimiques différents) ; et/ou
IV. une détermination de la ou des formules moléculaires (par exemple par résonance magnétique nucléaire) ; et/ou
V. une analyse spectrale ;
(c) la caractérisation chimique comprend des mesures de :
I. la réactivité chimique du ou des constituants phytochimiques ; et/ou
II. la solubilité du ou des constituants phytochimiques ; et/ou
III. la stabilité et le point de fusion du ou des constituants phytochimiques.
